Europäisches Patentamt

European Patent Office

Office européen des brevets

(19)

(11) Veröffentlichungsnummer : **0 085 337**
**B1**

(12) **EUROPÄISCHE PATENTSCHRIFT**

(45) Veröffentlichungstag der Patentschrift :
26.06.85

(51) Int. Cl.⁴ : **H 04 J 3/06, H 04 L 5/22**

(21) Anmeldenummer : 83100358.7

(22) Anmeldetag : 17.01.83

(54) Digitales Nachrichtenübertragungssystem.

(30) Priorität : 22.01.82 DE 3201965

(43) Veröffentlichungstag der Anmeldung :
10.08.83 Patentblatt 83/32

(45) Bekanntmachung des Hinweises auf die Patenterteilung : 26.06.85 Patentblatt 85/26

(84) Benannte Vertragsstaaten :
AT BE CH DE FR GB IT LI NL SE

(56) Entgegenhaltungen :
DE-A- 2 908 366
US-A- 3 946 161
US-A- 4 132 862
SIEMENS ZEITSCHRIFT, 46. Jahrgang, 1974, Beiheft "Nachrichten-Übertragungstechnik", Berlin und München, DE, H.M. CHRISTIANSEN und R. KERSTEN "Grundsätzliches zur Nachrichten-Übertragungstechnik mit Pulscodemodulation", Seiten 257-262

(73) Patentinhaber : Siemens Aktiengesellschaft
Berlin und München Wittelsbacherplatz 2
D-8000 München 2 (DE)

(72) Erfinder : Burger, Erich, Dipl.-Ing.
Kerschensteinerstrasse 140
D-8034 Germering (DE)

**Beschreibung**

Die Erfindung betrifft ein digitales Nachrichtenübertragungssystem, bei dem auf der Sendeseite zwei im Rhythmus zweier zueinander plesiochroner Datentakte abgestastete Impulsfolgen um jeweils eine Zusatzinformation nach Art des « Positive Stuffing » aufgestockt sind, bei dem ferner die beiden Impulsfolgen einschließlich ihrer Zusatzinformationen zu einer Summenimpulsfolge zusammengefaßt in einem Pulsrahmen zur Empfangsseite gelangen und bei dem auf der Empfangsseite die auf der Sendeseite getroffenen Maßnahmen wieder rückgängig gemacht sind.

Bei einem derartigen digitalen Nachrichtenübertragungssystem unter Verwendung zueinander plesiochroner Datentakte zur Abtastung von Impulsfolgen sind auch die durch die Abtastung gewonnenen Signale wieder plesiochron, d. h. daß sie zueinander eine geringe Frequenztoleranz aufweisen. Um zueinander plesiochrone Impulsfolgen in Bündeln zusammenzufassen und zur Empfangsseite zu übertragen, muß die Bitfolgefrequenz der Summenimpulsfolge mindestens so groß sein wie die maximale Summe der Frequenzen der einzelnen Impulsfolgen. Liegen die Frequenzen der einzelnen Impulsfolgen nicht an ihrer oberen Grenze, so werden Bitplätze in der Summenimpulsfolge von den einzelnen Impulsfolgen zum Teil nicht benötigt. Die nicht ausgenutzten Bitplätze müssen dabei empfangsseitig eliminiert werden, damit die einzelnen Impulsfolgen auf der Empfangsseite wieder fehlerfrei ausgegeben werden können. Dazu ist eine entsprechende Information von der Sendeseite zur Empfangsseite zu übertragen, die zusätzlich in die Summenimpulsfolge eingefügt werden muß. Darüber hinaus wird in die Summenimpulsfolge noch eine Information eingefügt, die es der die Summenimpulsfolge aufnehmenden Empfangsseite ermöglicht, sich auf den Pulsrahmen der Summenimpulsfolge zu synchronisieren. Durch diese Zusatzinformationen erhöht sich die Bitrate der Summenimpulsfolge geringfügig über den genannten Mindestwert. Derartige Verfahren sind als Impulsstopf-Verfahren oder « Positive Stuffing » bekannt, wie sie z. B. in der Siemens-Zeitschrift 48 (1974), Beiheft « Nachrichtenübertragungstechnik », Seiten 261, 262 und Seiten 272 bis 274 sowie in der US-PS 3 946 161 beschrieben sind.

Durch die US-PS 4 132 862 ist es auch bekannt, eingangsseitige plesiochrone Impulsfolgen über einen Zwischenspeicher hinweg zunächst nach dem Stuffingverfahren in Impulsfolgen mit gleicher Bittaktfrequenz überzuführen, bevor sie dann zu einer zeitmultiplexen Summenimpulsfolge zusammengefügt werden. Die erforderlichen Stopfimpulse werden hierbei jeweils über einen Phasenvergleich des Taktes (Einschreibetakt) einer plesiochronen Impulsfolge auf der Eingangsseite eines Zwischenspeichers mit dem Auslesetakt dieser Impulsfolge aus dem Zwischenspeicher ermittelt. Der den Phasenvergleich durchführende Phasenkomparator benötigt hierzu schnelle, den Einschreib- und Auslesetakt zählende Zählvorrichtungen.

Für bestimmte mit plesiochronen Datentakten arbeitende Systemkonzepte, bei denen die ursprünglichen sendeseitigen Bittakte der zueinander plesiochronen Datentakte empfangsseitig wieder vorliegen sollen und aus der ankommenden Summenimpulsfolge zurückgewonnen werden müssen, ist es erforderlich, in der Summenimpulsfolge eine geeignete Phaseninformation mit zu übertragen.

Der Erfindung liegt die Aufgabe zugrunde, für ein digitales Nachrichtenübertragungssystem der einleitend genannten Art mit in der Summenimpulsfolge übertragener Phaseninformation eine geeignete Lösung anzugeben.

Diese Aufgabe wird gemäß der Erfindung dadurch gelöst, daß eine der beiden Zusatzinformationen die momentane Phasenbeziehung zwischen den beiden zueinander plesiochronen Datentakten als binäres Phasenwort enthält, daß auf der Sendeseite zur Gewinnung dieses binären Phasenwortes eine auf den einen, den Bezugsdatentakt darstellenden Datentakt synchronisierte Taktversorgung mit einer Phasenregelschleife vorgesehen ist, aus der über einen Teiler ein Hilfstakt abgeleitet ist, daß ferner ein Mischer vorgesehen ist, dem an seinem einen Eingang ein Summentakt aus dem Bezugsdatentakt und dem Hilfstakt und an seinem anderen Eingang der andere, zum Bezugsdatentakt plesiochrone Datentakt zugeführt ist und daß der am Mischerausgang auftretende, zum Hilfstakt plesiochrone Hilfstakt in der Phase mit dem Hilfstakt verglichen ist.

Bei der Erfindung wird von der Erkenntnis ausgegangen, daß zur Gewinnung der von der Sendeseite zur Empfangsseite zu übertragenden Phaseninformation sendeseitig zunächst die Phasenbeziehung zwischen den beiden zueinander plesiochronen Datentakten gemessen werden muß. Grundsätzlich bestünde die Möglichkeit, diese Messung mit Zähleranordnungen durchzuführen, die im Start-Stop-Betrieb arbeiten. Hierbei wird der Zählvorgang z. B. bei einer positiven Flanke eines Datentaktes gestartet und bei der nächstfolgenden positiven Flanke des anderen Datentaktes beendet.

Diese Zähleranordnungen weisen jedoch den Nachteil auf, daß sie eine sehr hohe Zählfrequenz benötigen.

Beträgt die Frequenz der beiden zueinander plesiochronen Datentakte z. B. jeweils 8,448 MHz, mit denen die beiden Impulsfolgen von jeweils 8,448 KBit abgetastet werden, und wird die Phasenbeziehung zwischen den beiden zueinander plesiochronen Datentakten als binäres 4-stelliges Phasenwort codiert, so beträgt die Zählfrequenz 8,448 MHz. $2^4 \approx 135$ MHz.

Schaltungen mit derart hohen Zählfrequenzen erfordern darüber hinaus einen relativ großen Bauteileaufwand sowei einen relativ hohen Strombedarf.

Bei der Erfindung werden in außerordentlich vorteilhafter Weise diese bei Zähleranordnungen auftretenden Schwierigkeiten dadurch vermieden, daß die relativ hohen Zählfrequenzen durch die Erzeugung eines niederfrequenten Hilfstaktes und eines dazu plesiochronen Hilfstaktes und deren Phasenvergleich auf eine niedrigere Frequenzebene herabgesetzt sind. Der eine Hilfstakt wird dabei direkt der Phasenregelschleife entnommen, während der dazu plesiochrone Hilfstakt als Differenzsignal am Ausgang eines Mischers gewonnen ist, an dessen einem Eingang der plesiochrone Datentakt und an dessen anderem Eingang der Summentakt aus dem Bezugsdatentakt und dem Hilfstakt ansteht.

Weitere vorteilhafte Ausgestaltungen der Erfindung sind in den Ansprüchen 2 bis 10 angegeben.

Ein Ausführungsbeispiel der Erfindung ist in der Zeichnung dargestellt und wird im folgenden näher beschrieben.

Es zeigen

Figur 1 eine Schaltungsanordnung zur Gewinnung der Phasenbeziehung zwischen zwei zueinander plesiochronen Datentakten auf der Sendeseite des digitalten Nachrichtenübertragungssystems gemäß der Erfindung,

Figur 2 ein Zeitdiagramm zur Erläuterung der Wirkungsweise der Phasenmessung nach Fig. 1,

Figur 3 eine Schaltungsanordnung für die Auswertung der Phasenbeziehung zur Regenerierung der zueinander plesiochronen Datentakte auf der Empfangsseite des digitalen Nachrichtenübertragungssystems gemäß der Erfindung.

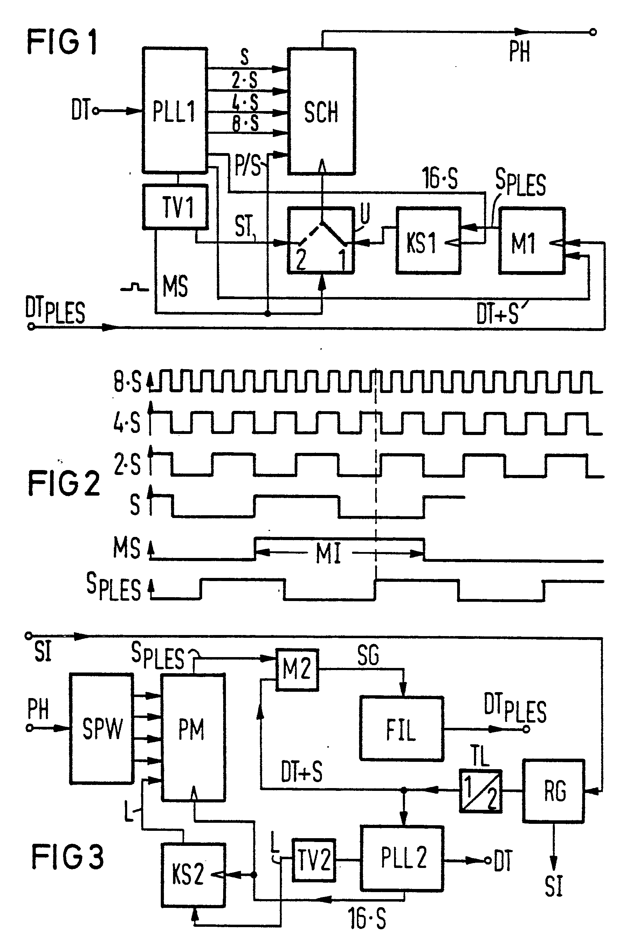

Zur Gewinnung der Phasenbeziehung zwischen dem den Bezugsdatentakt DT darstellenden einen Datentakt und dem dazu plesiochronen Datentakt $DT_{PLES}$ ist in der Schaltungsanordnung nach Fig. 1 eine auf den Bezugsdatentakt DT synchronisierte Taktversorgung TV1 mit einer Phasenregelschleife PLL1 vorgesehen. Aus dieser Phasenregelschleife PLL1 ist über einen Teiler ein Hilfstakt S abgeleitet. Bei Frequenzen von z. B. 8,448 MHz für den Bezugsdatentakt DT und den dazu plesiochronen Datentakt $DT_{PLES}$ ist für den Hilfstakt S eine Frequenz von 128 kHz gut geeignet.

Der Hilfstakt S wird nun mit einem dazu plesiochronen Hilfstakt $S_{PLES}$ in der Phase verglichen. Hierzu muß der plesiochrone Hilfstakt $S_{PLES}$ erst erzeugt werden. Hierfür ist ein Mischer M1 vorgesehen, dem an seinem einen Eingang ein Summendatentakt DT + S aus dem Bezugsdatentakt DT und dem Hilfstakt S und an seinem anderen Eingang der andere, zum Bezugsdatentakt DT plesiochrone Datentakt $DT_{PLES}$ zugeführt ist. Die Frequenz des plesiochronen Datentaktes $DT_{PLES}$ beträgt hierbei — wie oben angegeben — z. B. 8,448 MHz. Die Frequenz des Summentaktes DT + S ergibt sich entsprechend aus der Summe der Frequenz des Bezugsdatentaktes DT und der Frequenz des Hilfstaktes S zu 8,448 MHz + 128 kHz = 8,576 MHz. Der plesiochrone Hilfstakt $S_{PLES}$ entsteht am Ausgang des Mischers M1 als Differensignal der beiden Eingangsgrößen. Die Frequenz des plesiochronen Hilfstaktes $S_{PLES}$ beträgt also 128 kHz. Der Mischer M1 in seiner Funktion als Differenzglied ist vorzugsweise als D-Flip-Flop realisiert.

Der Phasenvergleich wird nun in der Weise durchgeführt, daß der am Ausgang des Mischers M1 gewonnene plesiochrone Hilfstakt $S_{PLES}$ zueinander kohärente Signale mit dem $2^n$-fachen (n = 0, 1, 2 ... (K-1)) der Frequenz des Hilfstaktes S gleichzeitig abtastet. Als Ergebnis dieser Abtastung werden K Abtastwerte gewonnen, die die einzelnen Bits für die als binäres Phasenwort PH codierte Phasenbeziehung darstellen. In dem Ausführungsbeispiel ist K = 4 gewählt, d. h. das Phasenwort PH weist 4 bits auf. Mit K = 4 ergeben sich für die $2^n$-fachen (n = 0, 1, 2 ... (K-1)) der Frequenz des Hilfstaktes S die kohärenten Signale S, 2·S, 4·S und 8·S.

Diese kohärenten Signale S, 2·S, 4·S und 8·S gelangen von der Phasenregelschleife PLL1 zu einem Schieberegister SCH. Der plesiochrone Hilfstakt $S_{PLES}$ gelangt, von Ausgang des Mischers M1 ausgehend, über einen Umschalter U ebenfalls zu dem Schieberegister SCH. Der Umschalter U weist hierbei zwei Schaltstellungen 1, 2 auf und ist von dem Meßintervall MI eines von der Taktversorgung TV1 ausgehenden Meßsignals MS angesteuert. Die eine Schaltstellung 1 des Umschalters U entspricht hierbei dem Bereich innerhalb des Meßintervalls MI. Bei dieser Schaltstellung 1 werden die durch die Abtastung gewonnenen vier Abtastwerte in dem Schieberegister SCH parallel abgespeichert. Bei der dem Bereich außerhalb des Meßintervalls MI entsprechenden anderen Schaltstellung 2 des Umschalters U werden die vier Abtastwerte mittels eines Schiebetaktes ST seriell am Ausgang des Schieberegisters SCH abgegeben. Für den Parallel-Seriellwechselbetrieb ist eine zusätzliche Steuerleitung P/S für das Schieberegister SCH vorgesehen.

In Fig. 2 ist zur Erläuterung der Wirkungsweise der Phasenmessung ein Zeitdiagramm dargestellt, das den zeitlichen Verlauf des den Umschalter U ansteuernden Meßsignals MS, den zeitlichen Verlauf des plesiochronen Hilfstaktes $S_{PLES}$ sowie die vier zueinander kohärenten Signale mit dem $2^0$-, $2^1$-, $2^2$-, $2^3$-fachen der Frequenz des Hilfstaktes S zeigt. Die vier zueinander kohärenten Signale sind demnach S, 2·S, 4·S und 8·S

Die Abtastung selbst erfolgt z. B. mit der positiven Flanke des plesiochronen Hilfstaktes $S_{PLES}$. In Fig. 2 fällt die erste positive Flanke des plesiochronen Hilfstaktes $S_{PLES}$ in den Bereich außerhalb des Meßintervalls MI des Meßsignals MS. In diesem Fall findet noch keine Abtastung statt.

Die nächste positive Flanke des plesiochronen Hilfstaktes $S_{PLES}$ fällt hingegen in einen Bereich innerhalb des Meßintervalls MI des Meßsignals MS. Diese positive Flanke des plesiochronen Hilfstaktes $S_{PLES}$ tastet nun die Signale S, 2·S, 4·S und 8·S ab. Die Abtastung des Hilfstaktes S sowie des Signales 2·S ergibt jeweils eine logische « 0 », die Abtastung der Signale 4·S und 8·S ergibt eine logische « 1 ». Ordnet man dem Hilfstakt S das höchstwertigste Bit und dem Signal 8·S das niederwertigste Bit des binär codierten Phasenwortes PH zu, so werden in dem Schieberegister SCH — beginnend mit dem niederwertigsten Bit — die Abtastwerte 1, 1, 0, 0 parallel abgespeichert. Nach Umschaltung des Umschalters U in die Schaltstellung 2 werden diese vier Abtastwerte mittels des Schiebetaktes ST seriell am Ausgang des Schieberegisters SCH abgegeben, so daß dort das 4-stellige, binär codierte Phasenwort 1100 ansteht.

Die Abtastung selbst kann dadurch erschwert werden, daß die positive Flanke des plesiochronen Hilfstaktes $S_{PLES}$ zufällig mit einer Flanke eines der Signale S, 2·S, 4·S und 8·S zusammenfällt. Um eine sich daraus ergebende fehlerhafte Phasenmessung zu vermeiden, ist im Verbindungsweg zwischen dem Mischer M1 und dem Umschalter U eine Kippstufe KS1 vorgesehen, an deren Vorbereitungseingang ein der Phasenregelschleife PLL1 entnommenes Signal mit der $2^4$-fachen Frequenz des Hilfstaktes S ansteht, also das Signal 16·S. Dies hat zur Folge, daß der plesiochrone Hilfstakt $S_{PLES}$ bei der Abtastung nur dann wirksam wird, wenn seine positive Flanke innerhalb des Meßintervalls MI liegt und gleichzeitig das Signal 16·S eine logische « 1 » aufweist. Dadurch ist gewährleistet, daß die die Abtastung auslösende positive Flanke des plesiochronen Hilfstaktes $S_{PLES}$ nicht mit einer Flanke der abzutastenden Signale S, 2·S, 4·S und 8·S zusammenfällt.

Das am Ausgang des Schieberegisters SCH anstehende binäre Phasenwort PH dient als Zusatzinformation für eine Impulsfolge, die mit einer weiteren Impulsfolge zu einer Summenimpulsfolge SI zusammengefaßt ist und in einem Pulsrahmen zur Empfangsseite gelangt. Auf der Empfangsseite werden die auf der Sendeseite getroffenen Maßnahmen wieder rückgängig gemacht. Hierzu ist eine Auswertung der Phasenbeziehung zur Regenerierung der zueinander plesiochronen Datentakte DT, $DT_{PLES}$ erforderlich. Die entsprechende Schaltung auf der Empfangsseite hierfür ist in Fig. 3 angegeben.

In der empfangsseitigen Schaltungsanordnung nach Fig. 3 gelangt die ankommende Summenimpulsfolge SI zur Taktregenerierung zunächst an einen Regenerator RG und anschließend an einen Teiler TL, der ein Teilungsverhältnis von 2 : 1 aufweist. Am Ausgang dieses Teilers TL wird der aus dem Bezugsdatentakt DT und dem Hilfstakt S bestehende Summentakt DT + S zurückgewonnen. Aus dem Summentakt DT + S wird über eine zweite Phasenregelschleife PLL2 der Bezugsdatentakt DT direkt erzeugt. Die zweite Phasenregelschleife PLL2 erzeugt darüber hinaus noch das Signal mit dem $2^K$-fachen der Frequenz des Hilfstaktes S (für K = 4, also das Signal 16·S) sowie über eine zweite Taktversorgung TV2 einen Ladeimpuls L. Die Frequenz des Ladeimpulses L. entspricht gemäß dem Phasenmeßzyklus auf der Sendeseite dem $2^3$-fachen Teil der Frequenz des Hilfstaktes S, d. h. bei einer Frequenz von 128 kHz für den Hilfstakt S beträgt die Frequenz des Ladeimpulses L 128 kHz : 8 = 16 kHz.

Zur Erzeugung des zu dem Bezugsdatentakt DT plesiochronen Datentaktes $DT_{PLES}$ muß zunächst der plesiochrone Hilfstakt $S_{PLES}$ wieder gewonnen werden. Hierzu ist ein Phasenmodulator PM in Form eines (K = 4)-stufigen Binärteilers vorgesehen. Dem Phasenmodulator PM ist einerseits das der Summenimpulsfolge SI entnommene binäre Phasenwort PH über einen Serien/Parallelwandler SPW und andererseits der Ladeimpuls L über die zweite Taktversorgung TV2 und eine zweite Kippstufe KS2 zugeführt. Am Vorbereitungseingang des Phasenmodulators PM liegt das der zweiten Phasenregelschleife PLL2 entnommene Signal 16·S an. Dieses Signal 16·S ist auch dem Vorbereitungseingang der zweiten Kippstufe KS2 zugeführt.

Der Ladeimpuls L ist also nur dann an dem Phasenmodulator PM wirksam, wenn das Signal 16·S eine logische « 1 » aufweist. In dem als 4-stufigen Binärteiler ausgestalteten Phasenmodulator PM wird der plesiochrone Hilfstakt $S_{PLES}$ aus dem Signal 16·S erzeugt. Hierzu wird der Phasenmodulator PM durch den Ladeimpuls L periodisch mit dem 4-stelligen binären Phasenwort PH geladen. Eine Änderung des Phasenwortes PH hat eine Änderung der Phasenlage des plesiochronen Hilfstaktes $S_{PLES}$ zur Folge.

Der am Ausgang des Phasenmodulators PM entstehende plesiochrone Hilfstakt $S_{PLES}$ wird in einem Mischer M2 mit dem aus dem Bezugsdatentakt DT und dem Hilfstakt S bestehenden Summentakt DT + S gemischt. Der Mischer M2 ist hierbei als EXOR-Gatter ausgestaltet. Am Ausgang des Mischers M2 entsteht ein Signalgemisch SG, das einem schmalbandigen Filter FIL zugeführt ist, aus dem der gewünschte plesiochrone Datentakt $DT_{PLES}$ herausgefiltert ist. Das Filter FIL ist hierbei vorzugsweise als eine nichtlineare Phasenregelschleife mit einem frequenzsensitiven und einem phasensensitiven Komparator ausgestaltet.

**Patentansprüche**

1. Digitales Nachrichtenübertragungssystem, bei dem auf der Sendeseite zwei im Rhythmus zweier zueinander plesiochroner Datentakte abgetastete Impulsfolgen um jeweils eine Zusatzinformation nach Art des « Positive Stuffing » aufgestockt sind, bei dem ferner die beiden Impulsfolgen einschließlich ihrer Zusatzinformationen zu einer Summenimpulsfolge zusammengefaßt in einem Pulsrahmen zur Empfangsseite gelangen und bei dem auf der Empfangsseite die auf der Sendeseite getroffenen Maßnahmen wieder rückgängig gemacht sind, dadurch gekennzeichnet, daß eine der beiden Zusatzinformationen die momentane Phasenbeziehung zwischen den beiden zueinander plesiochronen Datentakten (DT, $DT_{PLES}$) als binäres Phasenwort (PH) enthält, daß auf der Sendeseite zur Gewinnung dieses binären Phasenwortes (PH) eine auf den einen, den Bezugsdatentakt (DT) darstellenden Datentakt synchronisierte Taktversorgung (TV1) mit einer Phasenregelschleife (PLL1) vorgesehen ist, aus der über einen Teiler ein Hilfstakt (S) abgeleitet ist, daß ferner ein Mischer (MI) vorgesehen ist, dem an seinem einen Eingang ein Summentakt (DT + S) aus dem Bezugsdatentakt (DT) und dem Hilfstakt (S) und an seinem anderen Eingang der andere, zum Bezugsdatentakt (DT) plesiochrone Datentakt ($DT_{PLES}$) zugeführt ist und daß der am Mischerausgang auftretende, zum Hilfstakt (S) plesiochrone Hilfstakt ($S_{PLES}$) in der Phase mit dem Hilfstakt (S) verglichen ist.

2. Digitales Nachrichtenübertragungssystem nach Anspruch 1, dadurch gekennzeichnet, daß der Phasenvergleich in der Weise durchgeführt ist, daß der plesiochrone Hilfstakt ($S_{PLES}$) K zueinander kohärente Signale mit dem $2^n$-fachen (n = 0, 1, 2... (K-1)) der Frequenz des Hilfstaktes (S) gleichzeitig abtastet und daß die als Ergebnis der Abtastung gewonnenen K Abtastwerte die einzelnen Bits für das zu bestimmende binäre Phasenwort (PH) darstellen.

3. Digitales Nachrichtenübertragungssystem nach Anspruch 1 oder 2, dadurch gekennzeichnet, daß ein mit der Phasenregelschleife (PLL1) und einem Umschalter (U) in Verbindung stehendes Schieberegister (SCH) vorgesehen ist, an das einerseits über die Phasenregelschleife (PLL1) die K zueinander kohärenten Signale mit dem $2^n$-fachen (n = 0, 1, 2... (K-1)) der Frequenz des Hilfstaktes (S) gelangen und dem andererseits der plesiochrone Hilfstakt ($S_{PLES}$) über den von einem Meßintervall (MI) eines Meßsignals (MS) gesteuerten Umschalter (U) zugeführt ist, daß ferner bei der dem Bereich innerhalb des Meßintervalls (MI) entsprechenden einen Schaltstellung (1) des Umschalters (U) die durch die Abtastung gewonnenen K Abtastwerte in dem Schieberegister (SCH) parallel abgespeichert sind und daß bei der dem Bereich außerhalb des Meßintervalls (MI) entsprechenden anderen Schaltstellung (2) des Umschalters (U) die K Abtastwerte mittels eines Schiebetaktes (ST) seriell am Ausgang des Schieberegisters (SCH) abgegeben sind.

4. Digitales Nachrichtenübertragungssystem nach Anspruch 1, 2 oder 3, dadurch gekennzeichnet, daß im Verbindungsweg zwischen dem Mischer (M1) und dem Umschalter (U) eine Kippstufe (KS1) vorgesehen ist, an deren Vorbereitungseingang ein der Phasenregelschleife (PLL1) entnommenes weiteres Signal mit der $2^K$-fachen Frequenz des Hilfstaktes (S) ansteht.

5. Digitales Nachrichtenübertragungssystem nach einem der vorhergehenden Ansprüche, dadurch gekennzeichnet, daß der Mischer (MI) ein D-Flip-Flop ist.

6. Digitales Nachrichtenübertragungssystem nach Anspruch 1, dadurch gekennzeichnet, daß auf der Empfangsseite aus der ankommenden Summenimpulsfolge (SI) über einen Regenerator (RG) und einen Teiler (TL) der Summentakt (DT + S) zurückgewonnen ist, aus dem über eine zweite Phasenregelschleife (PLL2) der Bezugsdatentakt (DT), das Signal mit dem $2^K$-fachen der Frequenz des Hilfstaktes (S) sowie ein Ladeimpuls (L) erzeugt sind, daß ferner zur Erzeugung des zu dem Bezugsdatentakt (DT) plesiochronen Datentaktes ($DT_{PLES}$) zunächst der plesiochrone Hilfstakt ($S_{PLES}$) wiedergewonnen und mit dem Summentakt (DT + S) gemischt ist, und daß aus diesem Signalgemisch (SG) der gewünschte plesiochrone Datentakt ($DT_{PLES}$) über ein Filter (FIL) herausgefiltert ist.

7. Digitales Nachrichtenübertragungssystem nach Anspruch 6, dadurch gekennzeichnet, daß zur Wiedergewinnung des plesiochronen Hilfstaktes ($S_{PLES}$) ein Phasenmodulator (PM) in Form eines K-stufigen Binärteilers vorgesehen ist, dem das Signal mit dem $2^K$-fachen der Frequenz des Hilfstaktes (S) zugeführt und der mit dem binären Phasenwort (PH) mittels des Ladeimpulses (L) periodisch geladen ist.

8. Digitales Nachrichtenübertragungssystem nach Anspruch 6 oder 7, dadurch gekennzeichnet, daß der Ladeimpuls (L) über eine zweite Taktversorgung (TV2) und eine zweite Kippstufe (KS2) hinweg an den Phasenmodulator (PM) gelangt und daß am Vorbereitungseingang der zweiten Kippstufe (KS2) das Signal mit der $2^K$-fachen Frequenz der Frequenz des Hilfstaktes (S) anliegt.

9. Digitales Nachrichtenübertragungssystem nach einem der Ansprüche 6 bis 8, dadurch gekennzeichnet, daß zur Mischung des plesiochronen Hilfstaktes ($S_{PLES}$) und des Summentaktes (DT + S) ein EXOR-Gatter (M2) vorgesehen ist.

10. Digitales Nachrichtenübertragungssystem nach einem der Ansprüche 6 bis 9, dadurch gekennzeichnet, daß das zur Filterung des Signalgemisches (SG) verwendete Filter (FIL) als nichtlineare Phasenregelschleife mit einem frequenzsensitiven und einem phasensensitiven Komparator ausgebildet ist.

**Claims**

1. A digital communications transmission system, wherein at the transmitting end two pulse sequences which are sampled in the timing of two data clock pulse trains which are plesiochronous in relation to one another are each increased by one additional item of information in the manner of positive stuffing, wherein moreover the two pulse sequences, including their items of additional information, having been combined to form a sum pulse sequence, are fed to the receiving end in one pulse frame, and wherein at the receiving end the measures which have been performed at the transmitting end are cancelled, characterised in that one of the two items of additional information includes the instantaneous phase relationship between the two data clock pulse trains (DT, $DT_{PLES}$) which are plesiochronous in relation to one another, as a binary phase word (PH), that at the transmitting end, in order that this binary phase word (PH) may be obtained, a clock pulse supply unit (TV1), which is synchronised to the one data clock pulse train which represents the reference data pulse train (DT), is provided with a phase regulating loop (PLL1) from which an auxiliary clock pulse train (S) is derived via a divider, that a mixer (MI) is also provided which at its first input is supplied with a sum clock pulse train (DT + S) comprising the reference data clock pulse train (DT) and the auxiliary clock pulse train (S) and at its other input is supplied with the other data clock pulse train ($DT_{PLES}$) which is plesiochronous in relation to the reference data clock pulse train (DT), and that the auxiliary clock pulse train ($S_{PLES}$) which occurs at the mixer output and which is plesiochronous in relation to the auxiliary clock pulse train (S) is compared in phase with the auxiliary clock pulse train (S).

2. Digital communications transmission system as claimed in claim 1, characterised in that the phase comparison is carried out in that the plesiochronous auxiliary clock pulse train ($S_{PLES}$) simultaneously samples K signals which are coherent with one another with $2^n$-times $(n = 0, 1, 2... (K-1))$ the frequency of the auxiliary clock pulse train (S), and that the K sample values obtained as a result of the sampling represent the individual bits for the binary phase word (PH) which is to be specified.

3. Digital communications transmission system as claimed in claim 1 or 2, characterised in that a shift register (SCH) is provided which is connected to the phase regulating loop (PLL1) and to a change-over switch (U) and which on the one hand is supplied via the phase regulating loop (PLL1) with the K signals which are coherent with one another and which have $2^n$-times $(n = 0, 1, 2... (K-1))$ the frequency of the auxiliary clock pulse train (S) and which on the other hand is supplied with the plesiochronous auxiliary clock pulse train ($S_{PLES}$) via the change-over switch (U) which is controlled by a measuring interval (MI) of a measurement signal (MS), that moreover at the first switch position (1) of the change-over switch (U) which corresponds to the range within the measurement interval (MI) the K sample values which are obtained as a result of the sampling are stored in parallel in the shift register (SCH), and that at the other switching position (2) of the change-over switch (U) which corresponds to the range outside of the measurement interval (MI) the K sample values are emitted in serial fashion from the output of the shift register (SCH) by means of a shift clock pulse train (ST).

4. Digital communications transmission system as claimed in claim 1, 2 or 3, characterised in that in the connection path between the mixer (MI) and the change-over switch (U) a flip-flop (KS1) is provided at whose priming input there occurs a further signal which is taken from the phase regulating loop (PLL1) and which has $2^K$-times the frequency of the auxiliary clock pulse train (S).

5. Digital communications transmission system as claimed in one of the preceding claims, characterised in that the mixer (MI) is a D-flipflop.

6. Digital communications transmission system as claimed in claim 1, characterised in that at the receiving end from the incoming sum pulse sequence (S1) via a regenerator (RG) and a divider (TL) the sum clock pulse train (DT + S) is regained, from which, via a second phase regulating loop (PLL2), the reference data clock pulse train (DT), the signal having $2^K$-times the frequency of the auxiliary clock pulse train (S) and a load pulse (L) are produced, that moreover, in order to produce the data clock pulse train ($DT_{PLES}$) which is plesiochronous in relation to the reference data clock pulse train (DT) firstly the plesiochronous auxiliary clock pulse train ($S_{PLES}$) is regained and is mixed with the sum clock pulse train (DT + S), and that the desired plesiochronous data clock pulse train ($DT_{PLES}$) is filtered out of this signal mixture (SG) via a filter (FIL).

7. Digital communications transmission system as claimed in claim 6, characterised in that in order to regain the plesiochronous auxiliary clock pulse train ($S_{PLES}$), a phase modulator (PM) is provided in the form of a K-stage binary divider which is supplied with the signal having $2^K$-times the frequency of the auxiliary clock pulse train (S) and which is periodically loaded with the binary phase word (PH) by means of the load pulse (L).

8. Digital communications transmission system as claimed in claim 6 or 7, characterised in that the load pulse (L) is fed via a second clock pulse supply unit (TV2) and via a second flip-flop (KS2) to the phase modulator (PM), and that the signal having $2^K$-times the frequency of the auxiliary clock pulse train (S) occurs at the priming input of the second flip-flop (KS2).

9. Digital communications transmission system as claimed in one of the claims 6 to 8, characterised in that an EXOR-gate (M2) is provided for mixing the plesiochronous auxiliary clock pulse train ($S_{PLES}$) and the sum clock pulse train (DT + S).

10. Digital communications transmission system as claimed in one of the claims 6 to 9, characterised in that the filter (FIL) which is used to filter the signal mixture (SG) comprises a nonlinear phase regulating loop with a frequency-sensitive and phase-sensitive comparator.

**Revendications**

1. Système de transmission numérique d'informations selon lequel deux trains d'impulsions, explorés au rythme de deux cadences de données plésiochrones l'une par rapport à l'autre, sont accumulés autour d'une information supplémentaire respective à la manière du « bourrage positif », et selon lequel en outre les deux trains d'impulsions, y compris leurs informations supplémentaires, parviennent, en étant réunis sous la forme d'un train d'impulsions somme dans une trame d'impulsions, sur le côté réception et selon lequel, sur ce côté réception, les dispositions prises du côté émission sont à nouveau supprimées, caractérisé par le fait que l'une des deux informations supplémentaires contient la relation de phase instantanée entre les deux cadences de données (DT, $DT_{PLES}$) plésiochrones l'une par rapport à l'autre, sous la forme d'un mot de phase binaire (PH), que du côté émission il est prévu, pour l'obtention de ce mot de phase binaire (PH), un dispositif générateur de cadence (TV1) qui est synchronisé sur l'une des cadences de données, qui représente la cadence de données de référence (DT), et qui comporte une boucle de régulation de phase (PLL1) à partir de laquelle se trouve dérivée par l'intermédiaire d'un diviseur une cadence auxiliaire (S), qu'il est en outre prévu un mélangeur (M1) à une entrée duquel est envoyée une cadence somme (DT + S) formée de la cadence de données de référence (DT) et de la cadence auxiliaire (S) et à l'autre entrée duquel est envoyée l'autre cadence de données ($DT_{PLES}$) plésiochrone par rapport à la cadence de données de référence (DT), et que la phase de la cadence auxiliaire ($S_{PLES}$), qui apparaît à la sortie du mélangeur et qui est plésiochrone par rapport à la cadence auxiliaire (S), est comparée à celle de la cadence auxiliaire (S).

2. Système de transmission numérique d'informations suivant la revendication 1, caractérisé par le fait que la comparaison de phase est réalisée de telle manière que la cadence auxiliaire plésiochrone ($S_{PLES}$) explore simultanément K signaux cohérents possédant une fréquence égale au multiple $2^n$ ($n = 0, 1, 2... (K-1)$) de la fréquence de la cadence auxiliaire (S) et que les K valeurs d'exploration obtenues en tant que résultat de l'exploration représentent les différents bits pour le mot de phase binaire (PH) devant être déterminé.

3. Système de transmission numérique d'informations suivant la revendication 1 ou 2, caractérisé par le fait qu'il est prévu un registre à décalage (SCH) qui est relié à la boucle de régulation de phase (PLL1) et à un commutateur (U) et auquel d'une part les K signaux cohérents entre eux et possédant une fréquence égale au multiple $2^n$ ($n = 0, 1, 2... (K-1)$) de la fréquence de la cadence auxiliaire (S) parviennent par l'intermédiaire de la boucle de régulation de phase (PLL1) et auxquels d'autre part la cadence auxiliaire plésiochrone ($S_{PLES}$) est envoyée par l'intermédiaire du commutateur (U) commandé par un intervalle de mesure (MI) d'un signal de mesure (MS), qu'en outre, lorsque le commutateur (U) est dans sa position de commutation (1) correspondant à la zone située à l'intérieur de l'intervalle de mesure (MI), les K valeurs d'exploration obtenues lors de l'exploration sont mémorisées en parallèle dans le registre à décalage (SCH) et que, lorsque le commutateur (U) est dans son autre position de commutation (2) correspondant à la zone située à l'extérieur de l'intervalle de mesure (MI), les K valeurs d'exploration sont délivrées en série au moyen d'une cadence de décalage (ST), à la sortie du registre à décalage (SCH).

4. Système de transmission numérique d'information suivant la revendication 1, 2 ou 3, caractérisé par le fait qu'il est prévu, dans la voie de liaison entre le mélangeur (M1) et le commutateur (U), un étage à bascule (KS1), à l'entrée de préparation duquel est appliqué un autre signal, qui est prélevé de la boucle de régulation de phase (PLL1) et qui possède une fréquence égale au multiple $2^K$ de la fréquence de la cadence auxiliaire (S).

5. Système de transmission numérique d'information suivant l'une des revendications précédentes caractérisé par le fait que le mélangeur (M1) est une bascule bistable de type D.

6. Système de transmission numérique d'information suivant la revendication 1, caractérisé par le fait que du côté réception on récupère à partir du train d'impulsions somme arrivant (SI), par l'intermédiaire d'un régénérateur (RG) et d'un diviseur (TL), la cadence somme (DT + S) à partir de laquelle on obtient, par l'intermédiaire d'une seconde boucle de régulation de phase (PLL2), la cadence (DT) des données de référence, le signal possédant la fréquence égale au multiple $2^K$ de la fréquence de la cadence auxiliaire (S) ainsi qu'une impulsion de charge (L), qu'en outre, pour l'obtention de la cadence de données ($DT_{PLES}$) plésiochrone par rapport à la cadence de données de référence (DT), on récupère tout d'abord la cadence auxiliaire plésiochrone ($S_{PLES}$) et on la mélange à la cadence somme (DT + S) et qu'à partir de ce mélange de signaux (SG), on extrait par filtrage, au moyen d'un filtre (SIL), la cadence plésiochrone désirée de données ($DT_{PLES}$).

7. Système de transmission numérique d'informations suivant la revendication 6, caractérisé par le fait que pour récupérer la cadence auxiliaire plésiochrone ($S_{PLES}$), il est prévu un modulateur de phase (PM) réalisé sous la forme d'un diviseur binaire à K étages, auquel est envoyé le signal possédant la fréquence égale au multiple $2^K$ de la fréquence de la cadence auxiliaire (S) et qui est chargé périodiquement par le mot de phase binaire (PH) au moyen de l'impulsion de charge (L).

8. Système de transmission numérique d'informations suivant la revendication 6 ou 7, caractérisé par le fait que l'impulsion de charge (L) parvient par l'intermédiaire d'un second dispositif générateur de cadence (TV2) et d'un second étage à bascule (KS2), au modulateur de phase (PM) et que le signal possédant une fréquence égale au multiple $2^K$ de la fréquence de la cadence auxiliaire (S) est appliqué à l'entrée de préparation du second étage à bascule (KS2).

9. Système de transmission numérique d'informations suivant l'une des revendications 6 à 8, caractérisé par le fait qu'il est prévu une porte OU-Exclusif (M2) pour réaliser le mélange de la

cadence auxiliaire plésiochrone ($S_{PLES}$) et de la cadence somme (DT + S).

10. Système numérique de transmission d'informations suivant l'une des revendications 6 à 9, caractérisé par le fait que le filtre (FIL), qui est utilisé pour le filtrage du mélange de signaux (SG), est réalisé sous la forme d'une boucle de régulation de phase non linéaire comportant un comparateur sensible à la fréquence et un comparateur sensible à la phase.

FIG 1

FIG 2

FIG 3